# EUROPÄISCHE PATENTSCHRIFT

(11) **EP 0 775 910 B1**
(45) Veröffentlichungstag und Bekanntmachung des Hinweises auf die Patenterteilung: **07.07.2004**
(21) Anmeldenummer: 96117842.3
(22) Anmeldetag: 07.11.1996
(51) Int. Cl.: G01N 29/24, G01N 27/90

(54) **Vorrichtung zur Prüfung von ferromagnetischen Materialien**
Apparatus for testing ferromagnetic materials
Dispositif de contrôle de matériaux ferromagnétiques

(30) Priorität: 22.11.1995 DE 19543481
(43) Veröffentlichungstag der Anmeldung: 28.05.1997
(73) Patentinhaber: PII Pipetronix GmbH, 76297 Stutensee (DE); Fraunhofer-Gesellschaft zur Förderung der angewandten Forschung e.V., 80686 München (DE)
(72) Erfinder: Willems, Herbert, 66809 Nalbach (DE); Barbian, Otto-Alfred, 66440 Blieskastel-Ballweiler (DE); Hübschen, Gerhard, Dr.rer.nat., 66740 Saarlouis (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 440 317
- EP-A- 0 609 754
- EP-A- 0 677 742
- DE-A- 3 410 434
- DE-C- 4 228 426
- DE-C- 4 301 622
- US-A- 4 466 287

## Beschreibung

Die Erfindung betrifft eine Vorrichtung zur Prüfung ferromagnetischer Materialien, wie Rohrleitungen oder dergleichen, auf Fehler, Risse, Korrosion oder dgl., mit zumindest einem durch zumindest eine in Verbindung mit einem Magnetfeld zur Anregung und/oder Detektion von Ultraschallwellen in der Materialwandung dienenden Hochfrequenz-Stromspule sowie zumindest ein das Magnetfeld erzeugendes Magnetsystem gebildeten elektromagnetischen Ultraschallwandler.

Eine zerstörungsfreie Werkstoffprüfung kann mittels Ultraschall erfolgen, bei der piezoelektrische Schwinger eingesetzt werden, von denen Ultraschallwellen ausgehen und mittels eines Ankopplungsmediums wie z.B. Wasser in das Werkstück eingeleitet werden. Zur Prüfung von Gaspipelines mit Ultraschall auf beispielsweise rißartige Fehler an der Rohraußenseite kommt jedoch prinzipiell nur eine trockene Ankopplung an der Rohrinnenseite, beispielsweise durch Luftschall, Ultraschallanregung mittels Laser oder die elektromagnetische Ultraschallanregung in Frage.

Aus der DE-OS 35 11 076 ist beispielsweise ein sogenannter Prüfmolch zur zerstörungsfreien Prüfung und Überwachung von Rohrleitungswandungen aus ferromagnetischem Material bekannt, bei dem zur Detektion von Wandschwächungen durch Rostfraß von außen oder innen und dgl. ein Magnetfeld, das dort von einem der Streufeld-Meßsysteme erzeugt wird, zur elektrodynamischen Anregung von Ultraschall und zur Streuflußmessung benutzt wird. Ein Molchglied ist mit gleichförmig am Umfang verteilten Elektromagneten versehen, die jeweils zwei in axialer Flucht zueinander liegende Meßköpfe, ein die Meßköpfe verbindendes Joch und eine Magnetisierungsspule auf diesen Meßköpfen aufweisen. Das Feld eines jeden Elektromagneten verläuft dabei parallel zur Rohrmittelachse. Zur Ultraschallmessung ist direkt an zumindest einem der Pole bzw. Magnetköpfe eine Luftspule angeordnet, die mit starken und sehr steilflankigen Stromimpulsen beaufschlagt wird. Die Laufzeit der durch diese Stromimpulse gemeinsam mit dem im Materialwandungsbereich wirksamen Magnetfeld im Material erzeugten Ultraschallwellen wird erfaßt und ausgewertet. Nachteilig beim Einsatz eines derartigen Prüfmolches ist das bei Bewegen des mit der Hochfrequenzspule versehenen Meßkopfes auftretende Barkhausen-Rauschen. Dieses Rauschen wird dadurch verursacht, daß die Weißschen Bezirke im ferromagnetischen Material bei Bewegung aufgrund der starken Änderung des Magnetfeldes sprunghaft in ihre neue Gleichgewichtslage umklappen. Dadurch wird ein Strom induziert, den man mit einem Verstärker in einem Lautsprecher als Knacken hören kann. Bei schnell aufeinanderfolgenden Feldänderungen entsteht dabei sogar ein prasselndes Rauschen. Hierdurch ist der Signal-Rausch-Abstand zu gering, als daß eine zuverlässige Messung möglich wäre.

Ähnliche Nachteile ergeben sich auch bei anderen vorbekannten Ultraschallprüfvorrichtungen, die elektromagnetische Ultraschallwandler innerhalb des Jochs eines Elektromagneten anordnen, der ein magnetisches Wechselfeld parallel zur Werkstoffoberfläche erzeugt. Entsprechende Vorrichtungen sind in der EP 0 440 317 A1 und der DE 42 28 426 C1 offenbart. Derartige Vorrichtungen erfodern eine zusätzliche Energieversorgung für diese Magnetanordnung und darüber hinaus eine Triggerung des gesamten Systems, damit der Sendeimpuls in Abstimmung mit dem alternierenden Vormagnetisierungsfeld ausgelöst wird.

Bei anderen bekannten elektromagnetischen Ultraschallwandlern, die zur Ultraschallprüfung und zur Werkstoffcharakterisierung elektrisch leitfähiger Materialien eingesetzt werden, beispielsweise dem in der EP-A-0 609 754 beschriebenen, sind zumindest zwei Reihen von Permanentmagneten mit alternierender Polbelegung und einer darunter angeordneten HF-Spule zur Anregung von horizontal polarisierten Transversalwellen (SH-Wellen) vorgesehen. Auch bei diesen Ultraschallwandlern ist bei der dynamischen Prüfung ferromagnetischer Materialien ein erhöhter Rauschuntergrund, d.h. eine Verkleinerung des nutzbaren Dynamikbereiches festzustellen, da bei Bewegung der elektromagnetischen Ultraschallwandler über eine ferromagnetische Komponente ebenfalls durch fortwährendes Umklappen/Ummagnetisieren der magnetischen Momente innerhalb der einzelnen Domänen des Materials das Barkhausen-Rauschen auftritt. Die Höhe dieses Rauschens beträgt je nach Abtastgeschwindigkeit bis zu 25 dB.

Der Erfindung liegt daher die Aufgabe zugrunde, unter Vermeidung der vorgenannten Nachteile eine Vorrichtung der eingangs genannten Art mit ausreichendem Signal-Rausch-Abstand zu schaffen, mittels der bei Bewegen der elektromagnetischen Ultraschallwandler über ferromagnetische Materialien das Barkhausen-Rauschen unterdrückt werden kann.

Erfindungsgemäß wird die genannte Aufgabe durch eine Vorrichtung zur Prüfung von ferromagnetischen Materialien der eingangs genannten Art gelöst, die weiterhin die Merkmale des Anspruchs 1 aufweist.

Durch die erfindungsgemäße Ausbildung wird der als solcher bereits für eine Ultraschallanregung im zu untersuchenden Material sorgende Ultraschall-Wandler nun derart von einer Magnetanordnung umgeben, dass die Materialwandung bei Bewegen des Ultraschallwandlers über diese hinweg im jeweils zu untersuchenden Bereich bereits vor Eintreffen des Wandlers derart vormagnetisiert ist, dass ein Ummagnetisieren bzw. Umklappen der Momente durch Einwirken des Ultraschallwandlers in diesem Bereich nicht mehr erfolgt. Durch die erfindungsgemäße Anordnung wird also eine horizontale und homogene Vormagnetisierung der zu überprüfenden Materialwandung erreicht. Da die Materialwandung durch den Einsatz der zusätzlichen Vorfeld-Magnetisierungseinheit vor Eintreffen des Ultraschall-Wandlers in dem betreffenden Bereich bis in die Nähe der magnetischen Sättigung magnetisiert wird, erfolgt durch den Ultraschall-Wandler selbst keine derartig starke Änderung des Magnetfeldes in der Materialwandung, dass bei Bewegung des Ultraschall-Wandlers die magnetisiert, d.h. umgeklappt werden, wodurch dann ein das Barkhausen-Rauschen verursachender Strom induziert wird.

Die Magnetanordnung ist erfindungsgemäß durch einen Permanentmagneten gebildet, der zumindest zwei Polbereiche unterschiedlicher Polarität aufweist. Durch einen derartigen ausreichend starken Permanentmagneten kann ein statisches, horizontales, magnetisches Vorfeld erzeugt werden, wobei aufgrund der Magnetisierung bis in die Nähe der magnetischen Sättigung ein Auftreten des Barkhausen-Rauschens zuverlässig unterdrückt wird. Da hier nun auch keinerlei Meßlücken vorhanden sind, wie dies bei Verwendung von Wechselstrommagneten der Fall ist, kann so mit einer hohen Abtastgeschwindigkeit von 1 bis 2 m/sec gearbeitet werden. Dies ist bei herkömmlichen Ultraschall-Wandlern ohne die erfindungsgemäße Vorfeld-Magnetisierung nicht möglich.

Dadurch, daß der Ultraschall-Wandler vorzugsweise mittig zwischen den Polbereichen der zusätzlichen Magnetanordnung angeordnet ist, befindet sich dieser während der Prüfung durch Ultraschallanregung jeweils im homogenen Bereich des Vorfelds, so daß ein Einwirken auf die Momente in der Materialwandung zuverlässig abgeschlossen ist. Der Ultraschall-Wandler dient dabei allein zur Anregung von Ultraschall sowie zum Empfang desselben und die zusätzliche Magnetanordnung allein zur Vorfeld-Magnetisierung in der Materialwandung.

In bevorzugter Ausgestaltung ist vorgesehen, daß der Ultraschall-Wandler zur Anregung/Erzeugung horizontal polarisierter Transversalwellen, also sogenannten SH-Wellen, im zu prüfenden Material dient. Derartige horizontal polarisierte Transversalwellen weisen im Gegensatz zu vertikal polarisierten Transversalwellen (SV-Wellen) den Vorteil auf, daß die sogenannte erste Mode der SH-Wellen keine Dispersion aufweist, also nicht auf größere Wanddicken und geringer auf Beschichtungen des zu untersuchenden Materials reagiert. Werden sogenannte SV-Wellen zur Prüfung dickwandiger Werkstücke, wie Rohrleitungen, die eine Dicke zwischen 6 bis 20 mm aufweisen, verwendet, so werden hierbei unterschiedliche Lamb-Moden angeregt, wobei all diese Moden stark dispersiv sind, so daß keine große Reichweite gegeben ist. Da aber insbesondere Gas-Pipelines gerade mit Bitumen zur Isolierung beschichtet sind, würde sich die Verwendung von vertikal polarisierten Transversalwellen negativ auswirken. Des weiteren erfolgt bei Reflexion von SH-Wellen keine Modenumwandlung an der Grenzfläche, während dies bei SV-Wellen der Fall ist. Insbesondere kann die Normalkomponente der SV-Wellen bei Wasserumgebung in diese einkoppeln, wodurch das Meßergebnis verfälscht würde.

Soll die erfindungsgemäße Vorrichtung zur Prüfung von Gas-Pipelines mittels Ultraschall auf beispielsweise rißartige Fehler an der Rohraußenseite verwendet werden, so ist bevorzugt vorgesehen, daß elektromagnetische Ultraschall-Wandler zwischen den Polbereichen bzw. Polschuhen einer zur Streuflußmessung dienenden Magnetisierungs-/Meßeinheit angeordnet sind. Derartige zur Streuflußmessung dienende Magnetsysteme sind beispielsweise aus der DE-OS 35 11 076 als Bestandteile sogenannte Prüfmolche bekannt. Hierbei wurden jedoch bisher zur Erzeugung von Ultraschallwellen Hochfrequenz-Stromspulen auf einem der Polbereiche aufgesetzt. Diese führte dann zu den bereits beschriebenen Nachteilen. Entsprechend der erfindungsgemäßen Vorrichtung wird aber nun der elektromagnetische Ultraschall-Wandler in Axial- oder aber in Umfangsrichtung der zu untersuchenden Rohrwandung zwischen den Polen unterschiedlicher Polarität des Streufluß-Magnetsystems angeordnet, wobei nun auf überraschend einfache und platzsparende Weise eine Ultraschallmessung bei gleichzeitiger Unterdrückung des Barkhausen-Rauschens möglich ist. Das notwendige horizontale, statische, magnetische Vorfeld wird dabei durch die am Prüfmolch bereits angeordneten Streufluß-Magnetsysteme erzeugt. Horizontal heißt hierbei, daß das Vorfeld im wesentlichen parallel zur Rohrwandung in axialer sowie in Umfangsrichtung verläuft.

Bevorzugt wird die durch die Polbereiche unterschiedlicher Polarität der zusätzlichen Magnetanordnung erzeugte statische Vormagnetisierung der Materialwandung zur Einstellung des Arbeitspunktes des elektromagnetischen Ultraschallwandlers verwendet.

In bevorzugter Ausgestaltung ist vorgesehen, daß die den elektromagnetischen Ultraschallwandler zwischen sich aufnehmenden Polbereiche bzw. Polschuhe unterschiedlicher Polarität der zusätzlichen Magnetanordnung achsparallel zum zu prüfenden Material, insbesondere einer Rohrleitung oder dgl., angeordnet sind. Derartige Magnetsysteme dienen dabei vorzugsweise außer zur statischen Vormagnetisierung bzw. Erneuerung eines Vorfeldes gleichzeitig zur Detektion eines sich durch quer oder schräg zur Achsrichtung des Rohres verlaufende Risse oder Öffnungen ergebendes Streufeld mittels entsprechender Sensoren. Es ist aber auch gleichermaßen oder aber gleichzeitig möglich, den elektromagnetischen Ultraschallwandler zwischen zwei Polbereichen bzw. Polschuhen unterschiedlicher Polarität einer zusätzlichen Magnetanordnung oder eines Streufluß-Magnetsystems vorzusehen, das in Umfangsrichtung des zu prüfenden Materials, insbesondere einer Rohrleitung oder dgl., angeordnet ist. Durch derartige Magnetsysteme werden dann bei gleichzeitiger statischer Vormagnetisierung Längsrisse in den Rohrleitungen bzw. in der Materialwandung erfaßt. Für die elektromagnetische Ultraschallanregung in der Materialwandung bei gleichzeitiger Unterdrückung des Barkhausen-Rauschens ist es lediglich erforderlich, daß eine Vormagnetisierung der zu untersuchenden Materialwände durch ein statisches, horizontal verlaufendes magnetisches Vorfeld erfolgt ist. Ob dies in Axial- oder Umfangsrichtung geschieht, ist für die Messung nicht von Bedeutung.

In weiterer bevorzugter Ausgestaltung ist dabei vorgesehen, daß die elektromagnetischen Ultraschallwandler derart zur Magnetfeldrichtung des Vorfelds zwischen den Polbereichen bzw. Polschuhen unterschiedlicher Polarität des zusätzlichen Magnetsystems angeordnet werden, daß ihre Abstrahlrichtung senkrecht oder parallel zur Feldrichtung des Vorfeldes liegt. Dies ist dadurch möglich, daß die Anregung der horizontal polarisierten Transversalwellen in der zu prüfenden Wandung allein durch die Ultraschall-Wandler und nicht durch Kombination Hochfrequenzspule mit beispielsweise Streuflußmagnetisierungs-/ Messeinheit erfolgt. Die zusätzliche Magnetanordnung dient also ausschließlich zur Erzeugung des zur Unterdrückung des Barkhausen-Rauschens notwendigen starken statischen, horizontalen, magnetischen Vorfeldes sowie bei einer Streuflusseinheit zur Detektion von längs und axial verlaufenden Rissen durch Messung des austretenden Streufeldes.

Bei den Hochfrequenzspulen der elektromagnetischen Ultraschallwandler kann es sich um Luftspulen handeln, wobei diese Luftspulen bevorzugt als Flachspulen mit mäanderförmig verlaufenden Wicklungen ausgebildet sind.

Der elektromagnetische Ultraschallwandler zur Anregung und zum Empfang von horizontal polarisierten Transversalwellen (SH-Wellen) wird also erfindungsgemäß durch eine Anordnung von Permanentmagnetsegmenten mit alternierender Polbelegung und zumindest einer unterhalb der Permanentmagnetsegmente angeordneten HF-Spule gebildet. Die Anregung von horizontal polarisierten Transversalwellen in der zu untersuchenden Materialwandung erfolgt so allein durch den elektromagnetischen Ultraschall-Wandler selbst. Bei Verwendung einer Folge von Permanentmagnetsegmenten alternierender Polbelegung und einer hierunter angeordneter HF-Spule zur Anregung der SH-Wellen ist der Wirkungsbereich der durch die kleinen Permanentmagnete erzeugten Magnetfelder auf den direkten Bereich unterhalb der Magnete, also die HF-Spule und im wesentlichen die Oberfläche der zu prüfenden Wandung, beschränkt, so dass diese Felder dem starken Vormagnetisierungsfeld in keinster Weise entgegenwirken, also auch keine Ummagnetisierungsvorgänge in der Wandung erfolgen kann und damit das Barkhausen-Rauschen zuverlässig unterdrückt wird. Des weiteren weist dieser Aufbau eines elektromagnetischen Ultraschallwandlers gegenüber einer Hochfrequenzspule, welche zwischen den Polbereichen eines U-förmigen Magneten angeordnet ist, den Vorteil auf, daß bei Anregung von SH-Wellen im Material nicht nur eine reine magnetostriktive Anregung dieser SH-Wellen erfolgt. Die magnetostriktive Anregung ist nämlich in gewissem Maße abhängig von den Werkstoffeigenschaften, so daß ihre Anregung mit hohem Aufwand genau gesteuert werden muß, um keine verfälschten Signale zu erhalten. Durch eine Anordnung von Permanentmagnetsegmenten alternierender Polbelegung und zumindest eine unterhalb dieser angeordnete Hochfrequenzspule gebildete Ultraschallwandler konnten bisher lediglich zur statischen Prüfung ferromagnetischer Werkstücke sowie Wandungen verwendet werden, da sich eben bei insbesondere schneller Bewegung über das zu prüfende Werkstück das bereits ausführlich beschriebene Barkhausen-Rauschen ergab.

In Weiterbildung ist dabei vorgesehen, daß der elektromagnetische Ultraschallwandler eine Anordnung aus zwei Reihen von Permanentmagneten alternierender Polbelegung aufweist, auf die eine Rechteckspule gewickelt ist. Vorzugsweise ist dabei die Hochfrequenzspule derart unterhalb der Reihen von Permanentmagneten alternierender Polbelegung angeordnet, daß jeweils Hochfrequenz-Spulenelemente gleicher Stromrichtung Permanentmagnetreihen gleicher Polaritätsfolge zugeordnet sind. Die Beaufschlagung einer derart angeordneten Hochfrequenz- bzw. Rechteckspule mit Hochfrequenzströmen erzeugt dann im zu untersuchenden ferromagnetischen Material Wirbelströme, deren Muster im wesentlichen demjenigen der Ströme der Hochfrequenzspule entspricht. Durch die Wechselwirkung zwischen diesen Wirbelströmen und dem durch die Permanentsegmente erzeugten Magnetfelder wirken in dem Material unmittelbar Lorenzkräfte senkrecht zu den Wirbelströmen sowie senkrecht zum angelegten Magnetfeld. Dadurch, daß einander benachbarte Segmente einer Reihe von Permanentmagnetsegmenten unterschiedliche Polarität zueinander aufweisen, werden so Scherkräfte wechselnder Richtung erzeugt, welche zur Anregung von SH-Wellen im Material führen. Da die so wirkenden Kräfte aufgrund der Ausrichtung und Anordnung der Hochfrequenzspule unterhalb der Reihen einander benachbarter Permanentsegmentreihen gleichgerichtet sind, kann so optimal über die wirkenden Lorenzkräfte eine Teilchenauslenkung im ferromagnetischen Material bewirkt werden, die dann zu einer direkten Anregung von Ultraschallwellen mit einer zweiseitigen Richtcharakteristik führt, die bezüglich der Wandlermitte symmetrisch ausgerichtet ist. Im Gegensatz zu einer magnetostriktiven Anregung von Ultraschallwellen ist bei dieser Anregung über Lorenzkräfte keine Abhängigkeit bezüglich der verwendeten Materialien gegeben, so daß die mit der magnetostriktiven Anregung verbundenen Nachteile entfallen. Da nun eine Matrix von Permanentmagnetsegmenten mit unter jeweils einer Segmentabfolge eines Magneten angeordneten Hochfrequenzspulenelementen verwendet wird, werden horizontal polarisierte Transversalwellen zu beiden Seiten des elektromagnetischen Ultraschallwandlers "abgestrahlt", so daß eine Zuordnung einzelner Signale zu einer Abstrahlrichtung, d.h. eine eindeutige Ortung eines auftretenden Materialfehlers bei fester Position des elektromagnetischen Ultraschallwandlers nicht möglich ist.

Bei einer anderen Ausführungsform ist daher vorgesehen, daß der elektromagnetische Ultraschallwandler aus zumindest zwei Sätzen in ihrer Ausrichtung schachbrettmusterartig verteilter Permanentmagnete unterschiedlicher Polarität und jeweils unterhalb diesen angeordneten Hochfrequenzspulenelementen besteht. Bei dieser Ausführungsform wird also der Gesamt-Ultraschallwandler in einzelne Sätze von Magnetsegmenten sowie Hochfrequenzspulensegmenten aufgeteilt, die bevorzugt zeitverzögert mit Signalen beaufschlagt werden. Dieser Wandler arbeitet nach dem Prinzip eines Phased Arrays. Diese Technik beruht auf dem Prinzip der Superposition einzelner Wellen zu einer resultierenden Welle. D.h., daß die Superposition der einzelnen von den verschiedenen Wandlerspulen erzeugten Wellen als resultierende Welle die Ultraschallwelle gewünschter Art erzeugt. Durch das Senden und Empfangen der Ultraschallwellen über mehrere Sender und Empfänger mit gezielt phasenverschobener Erregung der Wandler wird dabei erreicht, daß bei genau abgestimmter Phasenverzögerung gezielt konstruktive und destruktive Interferenz entsteht. Durch diese bevorzugte Ausführungsform ist dann das gewünschte Vor-Rückverhältnis einstellbar.

Bei einer weiteren Ausführungsform ist vorgesehen, daß der elektromagnetische Ultraschallwandler eine Anordnung aus zumindest vier Reihen von Permanentmagnetsegmenten wechselnder Polarität aufweist, wobei zwei benachbarte Reihen von Permanentmagnetsegmenten jeweils um ein Viertel der Periodizität der einzelnen Permanentmagnete jeder Reihe entlang ihrer Längsachse verschoben sind und für jeweils benachbarte Permanentmagnetanordnungen eine eigene Hochfrequenzspule vorgesehen ist. Da die beiden Hochfrequenzspulen zueinander mit um 90° phasenverzögerten Signalen beaufschlagbar sind, ist so die Ausbildung einer einseitigen Richtcharakteristik der durch Lorenzkräfte erzeugten horizontal polarisierten Transversalwellen hoher Güte mit einer hervorragenden Unterdrückung parasitärer Schallwellen im zu untersuchenden ferromagnetischen Material möglich. Die beiden auch hier bidirektional ausgestrahlten Wellen interferieren in der einen Richtung konstruktiv und löschen sich in der anderen Richtung aus. Auf diese Weise ist dann das gewünschte Vor-Rückverhältnis erzielbar, wozu in Weiterbildung beiträgt, daß die beiden Hochfrequenzspulen ineinander verschachtelt sind.

Während bei den vorhergehenden Ausführungsformen jeweils Luftspulen verwendet wurden, die unterhalb von Permanentmagnetsegmenten wechselnder/alternierender Polarität angeordnet sind, zeichnet sich eine weitere Ausführungsform durch eine auf einen magnetisch leitfähigen Kern gewickelte Hochfrequenzspule aus. Bei dem Kern handelt es sich bevorzugt um einen Ringbandkern, der eine Anordnung mehrerer Reihen von Permanentmagneten alternierender Polbelegung teilweise umgibt. Bei dieser Ausführungsform werden die zur Schallanregung benötigten Wirbelströme indirekt in die Materialoberfläche durch die Einprägung dynamischer Hochfrequenz-Magnetfelder eingekoppelt.

Insgesamt ist so eine Vorrichtung zur elektromagnetischen Prüfung ferromagnetischer Materialien geschaffen, mittels der beim Einsatz von elektromagnetischen Ultraschallwandlern für horizontal polarisierte Transversalwellen an ferromagnetischen Komponenten bei Bewegung der Ultraschallwandler über den zu untersuchenden Prüfling das bisher auftretende Barkhausen-Rauschen zuverlässig zur Erzielung eines hohen Signal-Rauschabstandes unterdrückt wird.

Weitere Vorteile und Merkmale der Erfindung ergeben sich aus den Ansprüchen und aus der nachfolgenden Beschreibung, in der Ausführungsbeispiele unter Bezugnahme auf die Zeichnungen im einzelnen erläutert sind. Dabei zeigt:
- Fig. 1: eine schematische Darstellung der erfindungsgemäßen Anordnung von elektromagnetischen Ultraschallwandlern zwischen den Polschuhen einer Streufluß-Magnetisierungseinheit innerhalb einer zu prüfenden Rohrleitung;
- Fig. 2: einen Ultraschallwandler in einer Explosionsansicht mit zwei Reihen von Permanentmagnetsegmenten alternierender Polbelegung sowie einer darunter angeordneten Hochfrequenzspule;
- Fig. 3: einen elektromagnetischen Ultraschallwandler mit drei Sätzen von Permanentmagnetsegmenten mit darunter angeordneten Hochfrequenzspulen in Explosionsansicht;
- Fig. 4: einen elektromagnetischen Ultraschallwandler für senkrecht zur Einfallsebene polarisierte Transversalwellen mit einseitiger Richtcharakteristik in Explosionsansicht;
- Fig. 5a: einen elektromagnetischen Ultraschallwandler mit auf einen Ringbandkern gewickelter Hochfrequenzspule;
- Fig. 5b: den Wandler aus Fig. 5a in Seitenansicht;
- Fig. 6: das Meßsignal eines elektromagnetischen Ultraschallwandlers ohne erfindungsgemäße Anordnung zwischen den Polbereichen einer Magnetisierungseinheit; und
- Fig. 7: das Meßsignal der erfindungsgemäßen Vorrichtung.

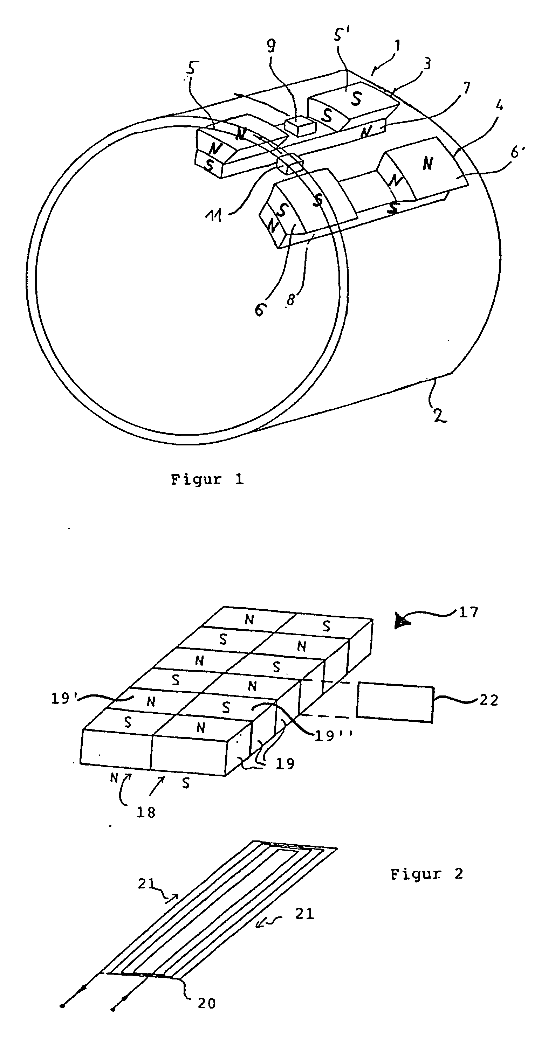

Die in Fig. 1 schematisch und lediglich teilweise dargestellte erfindungsgemäße Vorrichtung 1 ist im dargestellten Beispiel innerhalb einer ebenfalls nur teilweise dargestellten Rohrleitung mit einer Wandung 2 angeordnet. Die Vorrichtung weist dabei zwei Streufluß-Magnetisierungseinheiten 3, 4 in Form U-förmiger Permanentmagneten mit jeweils zwei in achsparalleler Flucht zueinander liegenden Polschuhen 5, 5', 6, 6' auf, die jeweils über ein Joch 7, 8 miteinander verbunden sind. Mittig zwischen den Polschuhen 5, 5' der Magnetisierungseinheit 3 ist im horizontal verlaufenden statischen Magnetfeld zwischen den Polschuhen 5, 5' ein elektromagnetischer Ultraschallwandler 9 (EMUS-Wandler) angeordnet, der im dargestellten Ausführungsbeispiel eine senkrecht zur Magnetfeldrichtung des durch die Magnetisierungseinheit 3 erzeugten statischen Vorfeldes verlaufende Abstrahlrichtung zur Ultraschallanregung in der Materialwandung 2 aufweist. Wie die Anregung in einem ferromagnetischen Material, wie einer Rohrwandung oder dgl., erfolgt, wird im weiteren Verlauf der Figurenbeschreibung genauer erläuert. Lediglich zur Verdeutlichung ist zwischen den Polschuhen 5, 6' der Magnetisierungseinheiten 3, 4 in Umfangsrichtung ebenfalls mittig zwischen den Polschuhen 5, 6' ein weiterer Wandler 11 angeordnet, der eine parallel zur Magnetfeldrichtung des statischen Vorfeldes ausgerichtete Abstrahlrichtung aufweist.

Die Abstrahlrichtung der jeweiligen Wandler 9, 11 ist dabei unabhängig von dem zur Vormagnetisierung der Wandung 2 dienenden statischen Vorfeld der Permanentmagneten 3, 4, da die Ultraschallanregung in der zu untersuchenden Materialwandung 2 allein durch die Ultraschall-Wandler 9, 11 erfolgt, die Streufluß-Magnetisierungseinheiten 3, 4 also lediglich zur Vormagnetisierung der Wandung 2 sowie zur Streufluß-Messung dienen.

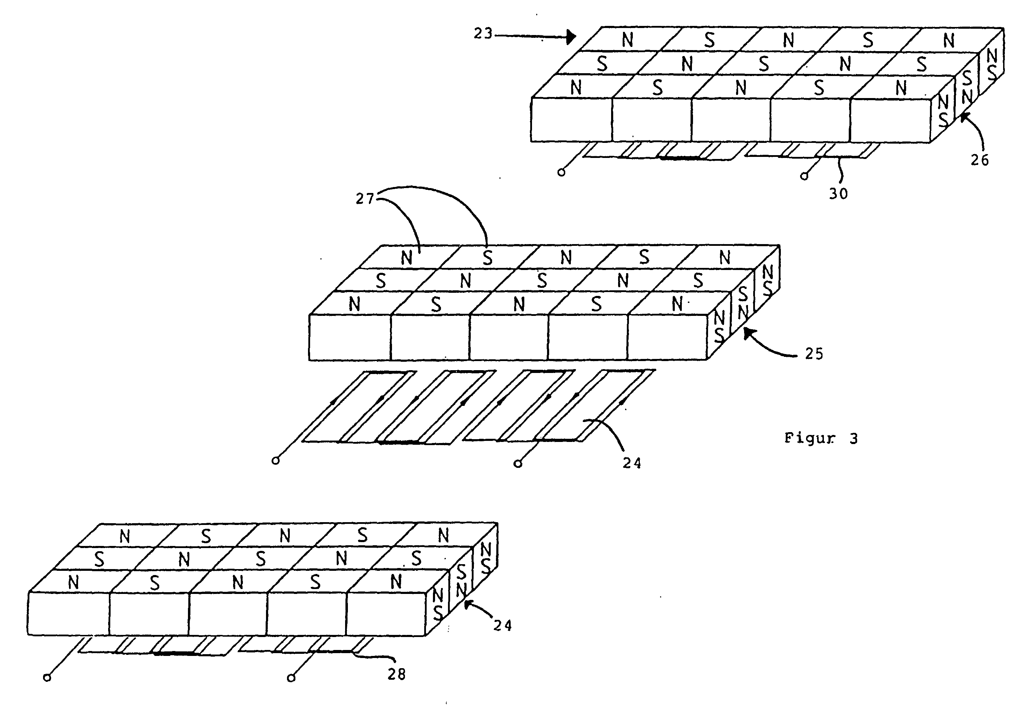

Bei dem in Fig. 2 dargestellten Ausführungsbeispiel weist der Ultraschallwandler 17 zur Anregung horizontal polarisierter Transversalwellen eine Magnetanordnung aus zwei Reihen 18 von periodisch angeordneten Permanentmagneten 19 bzw. Permanentmagnetsystemen 19 wechselnder Polarität auf, auf denen eine Rechteckspule 20 angeordnet ist. Diese ist in der Explosionsansicht unterhalb der Magnetanordnung dargestellt. Die Beaufschlagung der Rechteckspule 20 mit Hochfrequenzströmen, deren Richtung zu einem beispielhaft gewählten, festen Zeitpunkt mit dem Bezugszeichen 21 bezeichnet ist, erzeugt dann in elektrisch leitfähigen Materialien, wie einer Rohrwandung, über Lorenzkräfte eine Teilchenauslenkung, die zu einer direkten Anregung von Ultraschallwellen der genannten Art führt. Wie Fig. 2 zu entnehmen ist, sind die Segmente der Hochfrequenzspule 20 dabei derart unterhalb der einzelnen Reihen 18 angeordnet, daß die Ströme 21 in den Hochfrequenzspulen 20 jeweils in einer ersten Reihe 18 gleichgerichtet und in der benachbarten zweiten Reihe entgegengerichtet fließen. Durch die Stromimpulse werden im zu untersuchenden Material Wirbelströme mit einem den Strömen der Hochfrequenzspule entsprechenden Muster erzeugt, wodurch durch Wechselwirkung zwischen diesen Wirbelströmen und dem durch die Permanentmagnete 19 jeweils erzeugten Magnetfeld Lorenzkräfte senkrecht zum erzeugten Wirbelfeld und zur Magnetfeldrichtung im Material wirken. Da die Polarität der einander benachbarten Permanentmagnete 19', 19'' der beiden Reihen einander entgegengesetzt ist, gleichzeitig aber auch die Stromimpulse in diesen beiden Reihen einander entgegengerichtet sind, sind die unterhalb der Permanentmagnete 19', 19'' wirkenden Kräfte einander gleichgerichtet, zu den Kräften der ihnen in einer Reihe benachbarten Permanentmagnete 19 jedoch entgegengerichtet. Hierdurch kann dann die gewünschte horizontal polarisierte Transversalwelle angeregt werden. Die derart erzeugten Ultraschallwellen weisen eine zweiseitige Richtcharakteristik auf, die bezüglich der Wandlermitte symmetrisch ausgerichtet ist. Diese Wandlermitte ist anhand der Symmetrieebene hier mit dem Bezugszeichen 22 versehen. Da die erzeugten Ultraschallwellen symmetrisch zur Wandlermitte 22 nach beiden Seiten "abgestrahlt" werden, ist eine Auswertung der Empfangssignale erschwert, da eine Zuordnung einzelner Signale zu einer Abstrahlrichtung bei einer festen Position des Ultraschallwandlers 17 nicht erfolgen kann. Entsprechend ist eine eindeutige Ortung eines Materialfehlers nur durch Bewegen des elektromagnetischen Ultraschallwandlers möglich.

Bei dem in Fig. 3 dargestellten Ausführungsbeispiel weist der elektromagnetische Ultraschallwandler 23 zur Anregung horizontal polarisierter Transversalwellen (SH-Wellen) drei Sätze 24, 25, 26 in ihrer Ausrichtung schachbrettmusterartig verteilter Permanentmagnete 27 und jeweils unterhalb dieser angeordnete Hochfrequenzspulenelemente 28, 29, 30 auf. Ein solcher EMUS-Wandler kann bis zu acht Sätzen von Permanentmagnet-Anordnungen enthalten. Die Hochfrequenzspulen 28, 29, 30 weisen im dargestellten Ausführungsbeispiel eine vierfache mäanderförmige Schleifenbildung auf und sind unterhalb der hier 5x3 Permanentmagnete 27 angeordnet. Die Hochfrequenzspulen 28, 29, 30 dieses elektromagnetischen Ultraschallwandlers 23 werden jeweils zeitverzögert aktiviert. Ihre Stromrichtung ist jeweils durch Pfeile angedeutet. Die Verteilung der Hochfrequenzspulenelemente/-segmente 28, 29, 30 erfolgt dabei unterhalb der jeweiligen Reihen wie beim vorhergehenden Ausführungsbeispiel, so daß hierauf nicht erneut einzugehen ist. Durch die zeitverzögerte Aktivierung der HF-Spulen ist die Einstellung eines Vor-Rückverhältnisses im Gegensatz zur vorhergehenden Ausführungsform möglich.

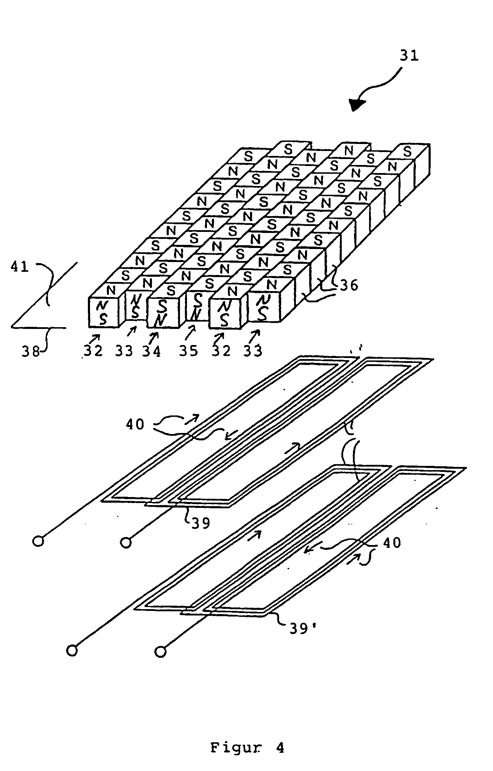

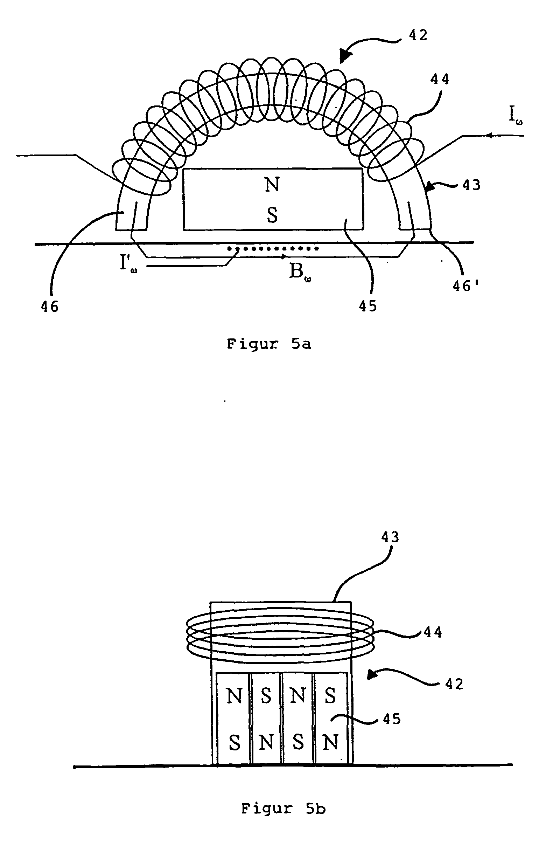

Bei der in Fig. 4 dargestellten Ausführungsform weist der elektromagnetische Ultraschallwandler 31 zur Anregung von SH-Wellen sechs Reihen 32, 33, 34, 35 von periodisch angeordneten Permanentmagneten 36 auf. Dabei sind jeweils benachbarte Reihen 32 und 33 bzw. 32 und 35 bzw. 35 und 34 sowie 34 und 33 um die halbe Breite eines einzelnen Permanentmagneten 36 zueinander verschoben angeordnet. Wie Fig. 5 zu entnehmen ist, wiederholt sich die erste Reihe 32 beim dargestellten Ausführungsbeispiel nach genau vier Reihen.

An zwei Permanentmagnetanordnungen bzw. Reihen 33 und 35, deren einzelne Permanentmagnete 36 bezüglich einer Grundlinie 38 auf gleicher Höhe, jedoch mit unterschiedlicher Polarität zueinander angeordnet sind, ist eine Doppel-Rechteckspule 39 derart angebracht, daß von Reihe zu Reihe auch die Stromrichtung 40 alterniert. Auf die bei diesem Ausführungsbeispiel verbleibenden drei Reihen 32 und 34 wird eine zweite Doppel-Rechteckspule 39 verschachtelt zur ersten angebracht, bei der wiederum die Stromrichtung von Magnetreihe zu Magnetreihe alterniert. Die beiden Hochfrequenzspulen 39, 39' werden im Sendefall mit zueinander um 90° phasenverschobenen Sendestromsignalen betrieben.

Mittels dieses elektromagnetischen Ultraschallwandlers 31 kann wiederum eine einseitige Richtcharakteristik erzielt werden. Die Größenordnung der Magnete und die Hochfrequenz wird dabei derart gewählt, daß der "Abstrahlungswinkel" des im Material anzuregenden Ultraschallsignals die Ebene 41 an der Unterseite der Permanentmagnete 36 streifend liegt. Durch die räumliche Verschiebung der die Transversalwellen anregenden "Ultraschallquellen" aus Permanentmagneten und Hochfrequenzspulen um ein Viertel der Wellenlänge, die man aufgrund der bezüglich der Grundlinie 38 verschobenen Permanentmagnetanordnung erhält, ergibt sich in der einen Abstrahlrichtung eine Phasendifferenz der Signale um 180°, d.h. Auslöschung der Signale, in der anderen Abstrahlrichtung eine konstruktive Überlagerung der Signale mit einer Phasendifferenz von 0 bzw. 360°.

Allen in den Fig. 2-4 dargestellten elektromagnetischen Ultraschallwandlern zur Anregung und zum Empfang von SH-Wellen ist gemeinsam, daß die Zuleitungen und Übergangssegmente der Hochfrequenz-Stromspulen möglichst klein gehalten sind, um für eine optimale Anregung der horizontal polarisierten Transversalwellen durch Teilchenauslenkung mittels Lorenzkräften zu sorgen. Darüber hinaus ist die Breite jeder Reihe von Permanentmagnetsegmenten alternierender Polarität vorzugsweise klein gegenüber ihrer Länge gewählt, so daß hierdurch die genannten Übergangssegmente jeder Hochfrequenzspule zwischen zwei zugehörigen Permanentmagnetreihen klein gegenüber der Länge jeder Reihe von Permanentmagnetsegmenten gehalten werden können.

Bei der in Fig. 5a und 5b dargestellten letzten Ausführungsform weist der zur Anregung und zum Empfang von SH-Wellen dienende elektromagnetische Ultraschallwandler 42 eine auf einen magnetisch leitfähigen Ringbandkern 43 gewickelte Hochfrequenzspule 44 auf. Der Ringbandkern 43 ist dabei oberhalb einer Anordnung mehrerer Reihen von Permanentmagneten 45 alternierender Polbelegung angeordnet, wobei er diese mit seinen Schenkeln 46, 46' seitlich umgibt. Um eine horizontal polarisierte Transversalwelle anzuregen, ist die Anordnung dabei derart, daß die Reihen von Permanentmagneten 45 mit ihrer langen Seite in Richtung des dynamischen B -Feldes liegen. Mittels dieses elektromagnetischen Ultraschallwandlers 42 werden die zur Schallanregung nötigen Wirbelströme indirekt in die Materialoberfläche durch die Einprägung dynamischer Hochfrequenz-Magnetfelder eingekoppelt.

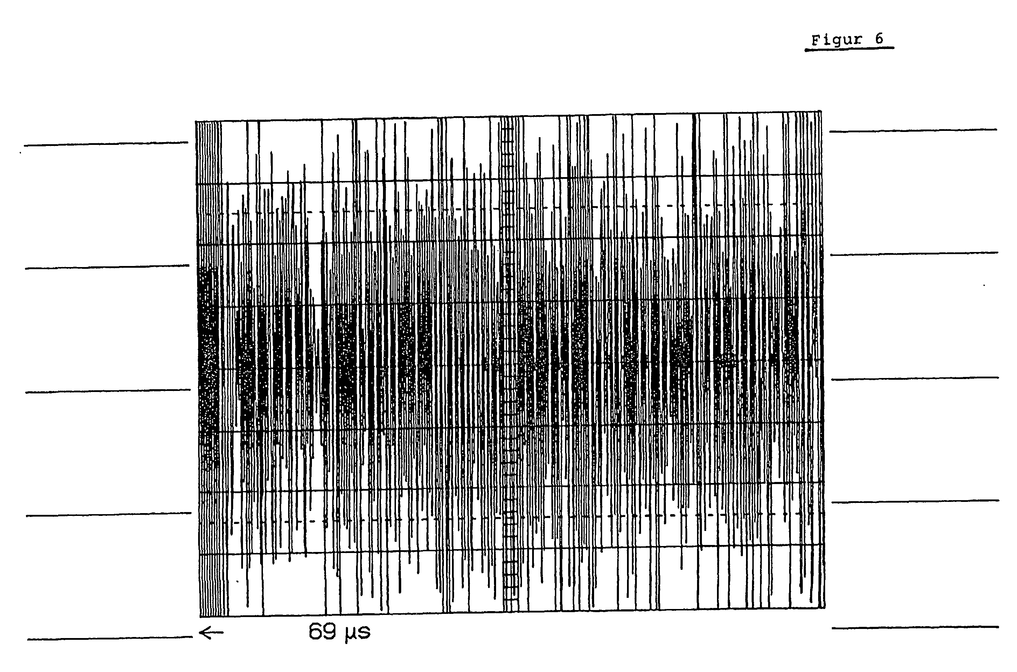

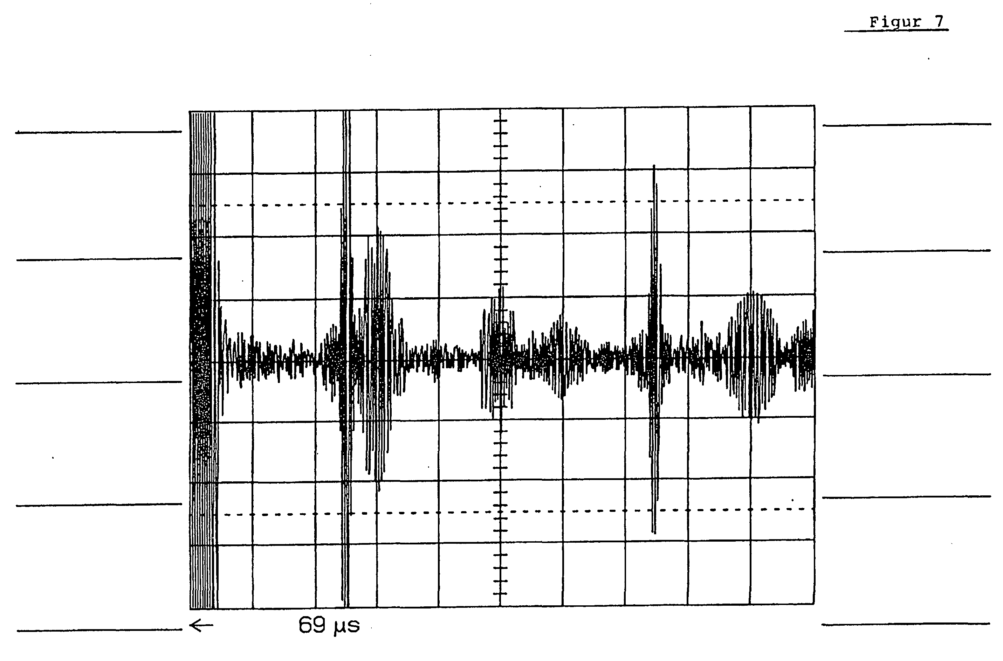

Mittels des in der Fig. 3 dargestellten elektromagnetischen Ultraschallwandlers, der erfindungsgemäß zwischen den Polbereichen einer zusätzlichen Magnetanordnung aus starken Permanentmagneten, beispielsweise einer Streufluß-Magnetisierungseinheit angeordnet ist, kann ein Meßsignal entsprechend dem in Fig. 7 dargestellten mit einem hohen Signal-Rausch- Abstand erreicht werden. Ohne die erfindungsgemäße Anordnung erhält man aufgrund des Barkhausen-Rauschens durch den Ultraschallwandler aus Fig. 3 allein lediglich ein Meßsignal wie das in Fig. 6 dargestellte.

## Patentansprüche

1. Vorrichtung zur Prüfung ferromagnetischer Materialien, wie Rohrleitungen oder dergleichen, auf Fehler, Risse, Korrosion oder dgl., mit zumindest einem elektromagnetischen Ultraschall-Wandler (9, 11, 17, 23, 31, 42), der zumindest eine in Verbindung mit einem Magnetfeld zur Anregung und/oder Detektion von Ultraschallwellen in der Materialwandung dienende Hochfrequenz-Stromspule sowie zumindest ein das Magnetfeld erzeugendes Magnetsystem aufweist und der zwischen den Polbereichen unterschiedlicher Polarität einer zusätzlichen, in der Materialwandung ein magnetisches Vorfeld erzeugenden Magnetanordnung (3, 4, 15) angeordnet ist, **dadurch gekennzeichnet, dass** die zusätzliche Magnetanordnung (3, 4, 14) eine ein statisches Vorfeld erzeugende Anordnung von Permanentmagneten ist und dass das Magnetsystem durch eine Anordnung von Permanentmagnetsegmenten (18, 19, 24, 25, 26, 27, 32, 33, 34, 35, 36) alternierender Polbelegung gebildet ist.

2. Vorrichtung nach Anspruch 1, **dadurch gekennzeichnet, daß** die zusätzliche Magnetanordnung (3, 4, 15) durch zumindest einen zumindest zwei Polbereiche unterschiedlicher Polarität aufweisenden Permanentmagneten gebildet ist.

3. Vorrichtung nach Anspruch 1 oder 2, **dadurch gekennzeichnet, daß** der Ultraschall-Wandler (9, 11, 17, 23, 31, 42) mittig zwischen den Polbereichen (5, 5', 6, 6') der zusätzlichen Magnetanordnung (3, 4, 15) angeordnet ist.

4. Vorrichtung nach einem der Ansprüche 1 bis 3, **dadurch gekennzeichnet, daß** der Ultraschall-Wandler (9, 11, 17, 23, 31, 42) zur Anregung/Erzeugung horizontal polarisierter Transversalwellen (SH-Wellen) im zu prüfenden Material dient.

5. Vorrichtung nach einem der Ansprüche 1 bis 4, **dadurch gekennzeichnet, daß** zumindest ein elektromagnetischer Ultraschall-Wandler (9, 11, 12, 17, 23, 31, 42) zwischen den Polbereichen (5,5', 6,6', 14,14') einer zur Streuflußmessung dienenden Magnetisierungs-Meßeinheit (3, 4, 15) angeordnet ist.

6. Vorrichtung nach einem der Ansprüche 1 bis 5, **gekennzeichnet durch** die Einstellbarkeit des Arbeitspunktes des elektromagnetischen Ultraschallwandlers (9, 11, 17, 23, 31, 42) mittels der **durch** die Polbereiche unterschiedlicher Polarität (6, 6', 5, 5') der zusätzlichen Magnetanordnung (3, 4, 15) erzeugte Vormagnetisierung der Materialwandung (2).

7. Vorrichtung zur Prüfung eines eine Symmetrieachse aufweisenden Materials nach einem der Ansprüche 1 bis 6, **gekennzeichnet durch** eine zum zu prüfenden Material, insbesondere einer Rohrleitung (2) oder dergleichen, achsparallele Anordnung der den Ultraschallwandler (9) zwischen sich aufnehmenden Polbereiche bzw. Polschuhe unterschiedlicher Polarität (5, 5') der zusätzlichen Magnetanordnung (3).

8. Vorrichtung zur Prüfung eines eine Symmetrieachse aufweisenden Materials nach einem der Ansprüche 1 bis 6, **gekennzeichnet durch** eine Anordnung in Umfangsrichtung des zu prüfenden Materials (2), insbesondere einer Rohrleitung oder dergleichen, der den elektromagnetischen Ultraschallwandler (11) zwischen sich aufnehmenden Polbereiche bzw. Polschuhe unterschiedlicher Polarität (5, 6') der zusätzlichen Magnetanordnung (3, 4).

9. Vorrichtung nach einem der Ansprüche 1 bis 8, **dadurch gekennzeichnet, daß** die Abstrahlrichtung des elektromagnetischen Ultraschallwandlers (9) senkrecht zur Feldrichtung des durch die zusätzliche Magnetanordnung (3) erzeugten Vorfeldes liegt.

10. Vorrichtung nach einem der Ansprüche 1 bis 8, **dadurch gekennzeichnet, daß** die Abstrahlrichtung des elektromagnetischen Ultraschallwandlers (11) parallel zur Feldrichtung des durch die zusätzliche Magnetanordnung (3, 4) erzeugten Vorfeldes liegt.

11. Vorrichtung nach einem der Ansprüche 1 bis 10, **dadurch gekennzeichnet, daß** die Hochfrequenzspule (13, 20, 28, 29, 30, 39) eine Luftspule ist.

12. Vorrichtung nach Anspruch 11, **dadurch gekennzeichnet, daß** die Hochfrequenzspule (13, 20, 28, 29, 30, 39) eine Flachspule mit mäanderförmig verlaufenden Wicklungen ist.

13. Vorrichtung nach einem der Ansprüche 1 bis 12, **dadurch gekennzeichnet, daß** der elektromagnetische Ultraschallwandler (17, 23, 31) zumindest eine unterhalb der Permanentmagnetsegmente (18, 19, 24, 25, 26, 27, 33, 34, 32, 35, 36) angeordnete Hochfrequenzspule (20, 28, 39, 39') aufweist.

14. Vorrichtung nach Anspruch 13, **dadurch gekennzeichnet, daß** der elektromagnetische Ultraschallwandler (17) eine Anordnung aus zwei Reihen (18) von Permanentmagneten (19) alternierender Polbelegung aufweist, auf denen zumindest eine Rechteckspule (20) angeordnet ist.

15. Vorrichtung nach einem der Ansprüche 13 oder 14, **dadurch gekennzeichnet, daß** die HF-Spule (20, 28, 39, 39') derart unterhalb der Reihen (18, 32, 33, 34, 35) von Permanentmagneten (19, 27, 36) alternierender Polbelegung angeordnet ist, daß jeweils Hochfrequenz-Spulenelemente (20, 28, 39, 39') gleicher Stromrichtung Permanentmagnetreihen gleicher Polaritätsfolge zugeordnet sind.

16. Vorrichtung nach Anspruch 13 oder 15, **dadurch gekennzeichnet, daß** der elektromagnetische Ultraschallwandler (23) aus zumindest zwei Sätzen (24, 25, 26) in ihrer Ausrichtung schachbrettmusterartig verteilter Permanentmagnete unterschiedlicher Polarität (27) und jeweils unterhalb diesen angeordnete Hochfrequenz-Spulenelementen (28, 29, 30) besteht.

17. Vorrichtung nach Anspruch 16, **dadurch gekennzeichnet, daß** die Hochfrequenz-Spulenelemente (28, 29, 30) zeitverzögert mit Signalen beaufschlagbar sind.

18. Vorrichtung nach einem der Ansprüche 13-15, **dadurch gekennzeichnet, daß** der elektromagnetische Ultraschallwandler (31) eine Anordnung aus zumindest vier Reihen (32, 33, 34, 35) von Permanentmagnetsegmenten alternierender Polarität (36) aufweist, wobei zwei einander benachbarte Reihen (32, 33, 34, 35) von Permanentmagnetsegmenten (36) jeweils um ein Viertel der Periodizität der einzelnen Permanentmagnete (36) jeder Reihe (32, 33, 34, 35) entlang ihrer Längsachse verschoben sind und für jeweils benachbarte Reihen (32, 33, 34, 35) von Permanentmagneten (36) eine eigene Hochfrequenzspule (39, 39') vorgesehen ist.

19. Vorrichtung nach Anspruch 18, **dadurch gekennzeichnet, daß** die beiden Hochfrequenzspulen (39, 39') benachbarter Reihen zueinander mit um 90° phasenverschobenen Signalen beaufschlagbar sind.

20. Vorrichtung nach Anspruch 18 oder 19, **dadurch gekennzeichnet, daß** die beiden Hochfrequenzspulen (39, 39') ineinander verschachtelt sind.

21. Vorrichtung nach einem der Ansprüche 1 bis 10, **dadurch gekennzeichnet, daß** der elektromagnetische Ultraschallwandler (42) eine auf einen magnetisch leitfähigen Kern (43) gewickelte Hochfrequenzspule (44) aufweist.

22. Vorrichtung nach Anspruch 21, **dadurch gekennzeichnet, daß** der Kern (43) ein Ringbandkern ist, der eine Anordnung mehrerer Reihen von Permanentmagneten (45) alternierender Polbelegung teilweise umgibt.

## Claims

1. Device for testing ferromagnetic materials, such as pipelines or the like, for faults, cracks, corrosion, etc., with at least one electromagnetic ultrasonic transducer (9, 11, 17, 23, 31, 42), which has at least one high frequency current coil used in conjunction with a magnetic field for exciting and/or detecting ultrasonic waves in the material wall, as well as at least one magnet system producing the magnetic field and which is positioned between the pole areas of different polarity of an additional magnet arrangement (3, 4, 15) producing a magnetic prefield in the material wall, **characterized in that** the additional magnet arrangement (3, 4, 14) is a static prefield-producing arrangement of permanent magnets and that the magnet system is formed by an arrangement of permanent magnetic segments (18, 19, 24, 25, 26, 27, 32, 33, 34, 35, 36) of alternating pole occupancy.

2. Device according to claim 1, **characterized in that** the additional magnet arrangement (3, 4, 15) is formed by at least one permanent magnet having at least two pole areas of different polarity.

3. Device according to claim 1 or 2, **characterized in that** the ultrasonic transducer (9, 11, 17, 23, 31, 42) is positioned centrally between the pole areas (5, 5', 6, 6') of the additional magnet arrangement (3, 4, 15).

4. Device according to one of the claims 1 to 3, **characterized in that** the ultrasonic transducer (9, 11, 17, 23, 31, 42) is used for exciting/producing horizontally polarized transverse waves (SH waves) in the material to be tested.

5. Device according to one of the claims 1 to 4, **characterized in that** there is at least one electromagnetic ultrasonic transducer (9, 11, 12, 17, 23, 31, 42) between the pole areas (5, 5', 6, 6', 14, 14') of a magnetization measuring unit (3, 4, 15) used for stray flux measurement.

6. Device according to one of the claims 1 to 5, **characterized by** the adjustability of the operating point of the electromagnetic ultrasonic transducer (9, 11, 17, 23, 31, 42) by means of the premagnetization of the material wall produced by the pole areas of different polarity (6, 6', 5, 5') of the additional magnet arrangement (3, 4, 15).

7. Device for testing a material having a symmetry axis according to one of the claims 1 to 6, **characterized by** an arrangement, which is axially parallel to the material to be tested, particularly a pipeline (2) or the like, of the pole areas or shoes of different polarity (5, 5') of the additional magnet arrangement (3) receiving between them the ultrasonic transducer (9).

8. Device for testing a material having a symmetry axis according to one of the claims 1 to 6, **characterized by** an arrangement in the circumferential direction of the material (2) to be tested, particularly a pipeline or the like, of the pole areas or shoes of different polarity (5, 6') of the additional magnet arrangement (3, 4) receiving between them the electromagnetic ultrasonic transducer (11).

9. Device according to one of the claims 1 to 8, **characterized in that** the emission direction of the electromagnetic ultrasonic transducer (9) is perpendicular to the field direction of the prefield produced by the additional magnet arrangement (3).

10. Device according to one of the claims 1 to 8, **characterized in that** the emission direction of the electromagnetic ultrasonic transducer (11) is parallel to the field direction of the prefield produced by the additional magnet arrangement (3, 4).

11. Device according to one of the claims 1 to 10, **characterized in that** the high frequency coil (13, 20, 28, 29, 30, 39) is an air coil.

12. Device according to claim 11, **characterized in that** the high frequency coil (13, 20, 28, 29, 30, 39) is a flat coil with meander-shaped windings.

13. Device according to one of the claims 1 to 12, **characterized in that** the electromagnetic ultrasonic transducer (17, 23, 31) has at least one high frequency coil (20, 28, 39, 39') positioned below the permanent magnets (18, 19, 24, 25, 26, 27, 33, 34, 32, 35, 36).

14. Device according to claim 13, **characterized in that** the electromagnetic ultrasonic transducer (17) has an arrangement of two rows (18) of permanent magnets (19) of alternating pole occupancy on which is placed at least one rectangular coil (20).

15. Device according to one of the claims 13 or 14, **characterized in that** the HF coil (20, 28, 39, 39') is so positioned below the rows (18, 32, 33, 34, 35) of permanent magnets (19, 27, 36) of alternating pole occupancy, that in each case high frequency coil elements (20, 28, 39, 39') of the same current direction are associated with permanent magnet rows with the same polarity sequence.

16. Device according to claim 13 or 15, **characterized in that** the electromagnetic ultrasonic transducer (23) comprises at least two sets (24, 25, 26) of permanent magnets of different polarity (27), whose orientation is distributed in chessboard pattern-like manner and with in each case high frequency coil elements (28, 29, 30) positioned below them.

17. Device according to claim 16, **characterized in that** the high frequency coil elements (28, 29, 30) can be supplied with signals in time-delayed manner.

18. Device according to one of the claims 13 to 15, **characterized in that** the electromagnetic ultrasonic transducer (31) has an arrangement of at least four rows (32, 33, 34, 35) of permanent magnet segments of alternating polarity (36) and two adjacent rows (32, 33, 34, 35) of permanent magnet segments (36) are in each case displaced by a quarter of the periodicity of the individual permanent magnets (36) of each row (32, 33, 34, 35) along the longitudinal axis thereof and for in each case adjacent rows (32, 33, 34, 35) of permanent magnets (36) is provided an independent high frequency coil (39, 39').

19. Device according to claim 18, **characterized in that** the two high frequency coils (39, 39') of adjacent rows can be supplied with signals mutually phase-displaced by 90°.

20. Device according to claim 18 or 19, **characterized in that** the two high frequency coils (39, 39') are nested in one another.

21. Device according to one of the claims 1 to 10, **characterized in that** the electromagnetic ultrasonic transducer (42) has a high frequency coil (44) wound onto a magnetically conductive core (43).

22. Device according to claim 21, **characterized in that** the core (43) is a ring band core, which partly surrounds an arrangement of several rows of permanent magnets (45) with an alternating pole occupancy.

## Revendications

1. Dispositif de contrôle de matériaux ferromagnétiques, tels que conduites ou similaires, pour la détection de défauts, de fissures, de corrosion ou similaire, comprenant au moins un transducteur électromagnétique d'ultrasons (9, 11, 17, 23, 31, 42), qui présente au moins une bobine ampèremétrique de champ magnétique de haute fréquence en liaison avec un champ magnétique servant à l'excitation et/ou la détection d'ondes ultrasonores dans la paroi du matériau, ainsi qu'au moins un système magnétique générant le champ magnétique, et qui est disposé entre les zones polaires de polarité différente d'un arrangement supplémentaire d'aimants (3,4,15) générant dans la paroi du matériau un pré-champ magnétique, **caractérisé en ce que** l'arrangement supplémentaire d'aimants (3, 4, 15) est un arrangement d'aimants permanents générant un pré-champ statique et **en ce que** le système magnétique est constitué par un arrangement de segments d'aimants permanents (18, 19, 24, 25, 26, 27, 32, 33, 34, 35, 36) en disposition alternée d'occupation polaire.

2. Dispositif selon la revendication 1, **caractérisé en ce que** l'arrangement supplémentaire d'aimants (3, 4, 15) est constitué par au moins un aimant permanent présentant au moins deux zones polaires de polarité différente.

3. Dispositif selon la revendication 1 ou 2, **caractérisé en ce que** le transducteur d'ultrasons (9, 11, 17, 23, 31, 42) est disposé centralement entre les zones polaires (5, 5', 6, 6') de l'arrangement supplémentaire d'aimants (3, 4, 15).

4. Dispositif selon l'une quelconque des revendications 1 à 3, **caractérisé en ce que** le transducteur d'ultrasons (9, 11, 17, 23, 31, 42) sert à exciter/générer des ondes transversales polarisées horizontalement (ondes SH) dans le matériau à contrôler.

5. Dispositif selon l'une quelconque des revendications 1 à 4, **caractérisé en ce qu'**au moins un transducteur électromagnétique d'ultrasons (9, 11, 17, 23, 31, 42) est disposé entre les zones polaires (5,5', 6,6', 14,14') d'une unité de mesure d'aimantation (3, 4, 15) servant à la mesure du flux de dispersion.

6. Dispositif selon l'une quelconque des revendications 1 à 5, **caractérisé par le fait que** le point de fonctionnement dynamique du transducteur électromagnétique d'ultrasons (9, 11, 17, 23, 31, 42) peut être réglé au moyen de la polarisation de la paroi (2) du matériau générée par les zones polaires de polarité différente (6, 6', 5, 5') de l'arrangement supplémentaire d'aimants (3, 4, 15).

7. Dispositif de contrôle d'un matériau présentant un axe de symétrie selon l'une quelconque des revendications 1 à 6, **caractérisé par** un arrangement à axe parallèle au matériau à contrôler, en particulier une conduite (2) ou similaire, des zones polaires ou des épanouissements polaires de polarité différente (5, 5') de l'arrangement supplémentaire d'aimants (3), entre lesquelles est disposé le transducteur d'ultrasons (9).

8. Dispositif de contrôle d'un matériau présentant un axe de symétrie selon l'une quelconque des revendications 1 à 6, **caractérisé par** un arrangement dans le sens périphérique du matériau (2) à contrôler, en particulier d'une conduite ou similaire, des zones polaires ou des épanouissements polaires de polarité différente (5, 6') de l'arrangement supplémentaire d'aimants (3, 4), entre lesquelles est disposé le transducteur électromagnétique d'ultrasons (11).

9. Dispositif selon l'une quelconque des revendications 1 à 8, **caractérisé en ce que** la direction du faisceau du transducteur électromagnétique d'ultrasons (9) est perpendiculaire à la direction de champ du pré-champ généré par l'arrangement supplémentaire d'aimants (3).

10. Dispositif selon l'une quelconque des revendications 1 à 8, **caractérisé en ce que** la direction du faisceau du transducteur électromagnétique d'ultrasons (11) est parallèle à la direction de champ du pré-champ généré par l'arrangement supplémentaire d'aimants (3, 4).

11. Dispositif selon l'une quelconque des revendications 1 à 10, **caractérisé en ce que** la bobine de haute fréquence (13, 20, 28, 29, 30, 39) est une bobine à air.

12. Dispositif selon la revendication 11, **caractérisé en ce que** la bobine de haute fréquence (13, 20, 28, 29, 30, 39) est une bobine plate à bobinage en forme de méandres.

13. Dispositif selon l'une quelconque des revendications 1 à 12, **caractérisé en ce que** le transducteur électromagnétique d'ultrasons (17, 23, 31) présente au moins une bobine de haute fréquence (20, 28, 39, 39') disposée en-dessous des segments d'aimant permanent (18, 19, 24, 25, 26, 27, 33, 34, 32, 35, 36).

14. Dispositif selon la revendication 13, **caractérisé en ce que** le transducteur électromagnétique d'ultrasons (17) présente un arrangement consistant en deux rangées (18) d'aimants permanents (19) en disposition alternée d'occupation polaire sur lesquelles est disposée au moins une bobine à noyau carré (20).

15. Dispositif selon l'une des revendications 13 ou 14, **caractérisé en ce que** la bobine HF (20, 28, 39, 39') est disposée sous les rangées (18, 32, 33, 34, 35) d'aimants permanents (19, 27, 36) à occupation polaire alternée de telle façon que des éléments de bobine de haute fréquence (20, 28, 39, 39') de sens de courant identique sont à chaque fois associés à des rangées d'aimants permanents de même séquence de polarité.

16. Dispositif selon la revendication 13 ou 15, **caractérisé en ce que** le transducteur électromagnétique d'ultrasons (23) consiste en au moins deux jeux (24, 25, 26) d'aimants permanents de polarité (27) variable disposés en damier et en éléments de bobine de haute fréquence (28, 29, 30) disposés à chaque fois en-dessous de ceux-ci.

17. Dispositif selon la revendication 16, **caractérisé en ce que** les éléments de bobine de haute fréquence (28, 29, 30) peuvent être alimentés en signaux de manière retardée.

18. Dispositif selon l'une quelconque des revendications 13-15, **caractérisé en ce que** le transducteur électromagnétique d'ultrasons (31) présente un arrangement consistant en au moins quatre rangées (32, 33, 34, 35) de segments d'aimants permanents de polarité (36) alternée, dans lequel deux rangées contiguës (32, 33, 34, 35) de segments d'aimants permanents (36) sont à chaque fois décalées du quart de la périodicité des aimants permanents (36) individuels de chaque rangée (32, 33, 34, 35) le long de leur axe longitudinal et dans lequel on prévoit pour des rangées contiguës (32, 33, 34, 35) d'aimants permanents (36) à chaque fois une bobine de haute fréquence (39, 39') qui leur est propre.

19. Dispositif selon la revendication 18, **caractérisé en ce que** les deux bobines de haute fréquence (39, 39') de rangées contiguës peuvent être alimentées en signaux en quadrature.

20. Dispositif selon la revendication 18 ou 19, **caractérisé en ce que** les deux bobines de haute fréquence (39, 39') sont imbriquées l'une dans l'autre.

21. Dispositif selon l'une quelconque des revendications 1 à 10, **caractérisé en ce que** le transducteur électromagnétique d'ultrasons (42) présente une bobine de haute fréquence (44) enroulée sur un noyau (43) magnétiquement conducteur.

22. Dispositif selon la revendication 21, **caractérisé en ce que** le noyau (43) est un tore plat, entourant partiellement un arrangement de plusieurs rangées d'aimants permanents (45) à occupation polaire alternée.
